# EUROPÄISCHE PATENTSCHRIFT

(11) **EP 1 228 256 B1**
(45) Veröffentlichungstag und Bekanntmachung des Hinweises auf die Patenterteilung: **29.12.2004**
(21) Anmeldenummer: 00975908.5
(22) Anmeldetag: 25.10.2000
(51) Int. Cl.: C21D 9/00, C21D 1/10, F16D 3/40

(54) **VERFAHREN ZUR VERBESSERUNG DER MECHANISCHEN EIGENSCHAFTEN, INSBESONDERE DER HÄRTE, VON ZAPFENKREUZEN FÜR DEN EINSATZ IN GELENKWELLEN**
METHOD FOR IMPROVING THE MECHANICAL PROPERTIES, ESPECIALLY THE HARDNESS, OF JOURNAL CROSSES FOR USE IN ARTICULATED SHAFTS
PROCEDE D'AMELIORATION DES PROPRIETES MECANIQUES, EN PARTICULIER DE LA DURETE, DE CROISILLONS DE TOURILLONS DESTINES A ETRE UTILISES DANS DES ARBRES DE TRANSMISSION

(30) Priorität: 10.11.1999 DE 19954178
(43) Veröffentlichungstag der Anmeldung: 07.08.2002
(73) Patentinhaber: Voith Turbo GmbH & Co. KG, 89522 Heidenheim (DE)
(72) Erfinder: LINDENTHAL, Hans, 89522 Heidenheim (DE); ASCH, Andreas, 89520 Heidenheim (DE)
(74) Vertreter: Dr. Weitzel & Partner
(86) Internationale Anmeldenummer: PCT/EP2000/010486
(87) Internationale Veröffentlichungsnummer: WO 2001/034851

(56) Entgegenhaltungen:
- DE-A- 1 955 010
- DE-C- 4 339 204
- US-A- 3 684 854
- US-A- 3 696 225

## Beschreibung

Die Erfindung betrifft ein Verfahren zur Verbesserung der mechanischen Eigenschaften, insbesondere der Härte, von Zapfenkreuzen für den Einsatz in Gelenkwellen, im Einzelnen mit den Merkmalen aus dem Oberbegriff des Anspruches 1, und Zapfenkreuz.

Der Einsatz von Zapfenkreuzen, umfassend vier um jeweils 90° in Umfangsrichtung betrachtet zueinander versetzt angeordnete Zapfen, welche im Bereich ihrer Zapfenwurzeln miteinander verbunden sind, in Gelenkwellen erfolgt zum Zweck der Drehmomentenübertragung, wobei die Gelenkwellen für unterschiedlichste Anwendungsfälle auszulegen sind. Insbesondere beim Einsatz in schweren Gelenkwellen sind die einzelnen Elemente unter Umständen enorm hohen Belastungen ausgesetzt, welche in bestimmten Mindestanforderungen an die Bauteilbeschaffenheit, insbesondere an die mechanischen Eigenschaften resultieren. Die am Zapfenkreuz wirksam werdenden Belastungen erfordern eine harte und gegebenenfalls verschleißarme Oberfläche. Aufgrund der dauernden dynamischen Belastung in Form einer Umfangs-Biegebeanspruchung sind dabei für das Zapfenkreuz eine harte Randschicht und ein zäher Kem anzustreben. Unter der Voraussetzung, daß nicht nur die Oberflächen der Zapfen eines Zapfenkreuzes sondern auch die zwischen zwei in Umfangsrichtung um 90° zueinander versetzt angeordneten Zapfen vorgesehenen Übergangsflächen, welche auch als Sattelflächen bezeichnet werden, gehärtet werden sollen, sind aus dem Stand der Technik im wesentlichen drei Verfahren bekannt.

Im ersten Verfahren wird das gesamte Zapfenkreuz einsatzgehärtet. Die aus einem kohlenstoffarmen Stahl geschmiedeten Zapfenkreuze werden dabei in einer kohlenstoffabgebenden Ofenathmosphäre bis zur gewünschten Einhärtetiefe auf etwa 0,8% Kohlenstoffgehalt aufgekohlt und abgeschreckt, wobei nur die aufgekohlten Randzonen hart werden, während der Kern zäh bleibt. Aufgrund der langen Glühzeiten gestaltet sich dieser Bearbeitungsvorgang jedoch sehr zeitaufwendig, energieintensiv und somit auch sehr teuer. Dieses Verfahren ist jedoch für das Härten von Zapfenkreuzen in der Regel deshalb nicht geeignet, weil die mit diesem Verfahren mit vertretbarem Aufwand realisierbare Randschicht-Härtetiefe absolut begrenzt ist. Die relative Tiefe der Härteschicht nimmt dabei mit der Bauteilgröße ab. Für eine hohe Bauteilbelastbarkeit ist es jedoch erforderlich, daß an allen Stellen unter der Oberfläche die Spannungen im Bauteil unter der Festigkeitsgrenze liegen. Daher ist bei großen Bauteilen tendenziell Induktivhärtung anzustreben, weil sich damit bekanntlich größere Einhärtetiefen erzielen lassen.

Zur Vermeidung dieser Nachteile wird in dem zweiten bekannten und in der DE 43 39 204 C1 beschriebenen Verfahren das Zapfenkreuz gleichzeitig und zusammenhängend vollständig induktiv im Bereich der Zapfenoberflächen und den Sattelflächen zwischen den kreuzförmig angeordneten Zapfen randschicht gehärtet. Zum induktiven Erwärmen des Zapfenkreuzes im gesamten Oberflächenbereich auf Umwandlungstemperatur wird das Zapfenkreuz im Zentrum eines torusförmigen, mittelfrequenten Magnetwechselfeides rotierend geführt. Das torusförmige, durch einen Ringinduktor erzeugte Magnetwechselfeld ist mit seiner Achse um etwa 45° zur Rotationsachse des Zapfenkreuzes geneigt und annähernd konzentrisch zum Mittelpunkt des Zapfenkreuzes angeordnet. Zum gleichmäßigen Härten bedarf es daher einer präzisen Positionierung des Zapfenkreuzes, ferner ist die zur Realisierung dieses Verfahrens erforderliche konstruktive Ausführung der Vorrichtung jedoch sehr aufwendig und teuer. Die zu erzielende Härtetiefe entspricht dabei der theoretisch anzustrebenden Härtetiefe im am höchsten beanspruchten Bereich. Für die Oberflächenbehandlung werden dabei mehr Resourcen gebunden als erforderlich.

Eine andere dritte Lösung besteht in der Verwendung von Forminduktoren. Stellvertretend wird diesbezüglich auf die EP 0 795 615 A1 und die Druckschrift Dr. Ing. Dieter Liedtke, Dr. Rolf Jönsson: "Wärmebehandlung"; expert-Verlag, 3. Auflage, S. 104 verwiesen. Dabei umschließt der Induktor das zu härtende Werkstück wenigstens teilweise. Das Werkstück führt dabei eine gleichförmige Abwälzbewegung, durch, wobei bei einem gleichbleibendem Kupplungszustand die Innenkontur des Induktors eine Parallele zur Abwälzkontur des Werkstückes darstellt. Bei Anwendung dieses Härteverfahrens zur Erhärtung von Zapfenkreuzen besteht der Nachteil darin, daß die Härteauslaufzone, in der die mechanischen Eigenschaften des Bauteils in der Regel nachteilig beeinflußt werden, immer an den hoch beanspruchten Stellen, d. h. im Bereich der Zapfenwurzel liegt. Ein weiterer wesentlicher Nachteil besteht darin, daß durch die sequentielle Härtung der Zapfen mit zylindrischen Induktoren immer eine benachteiligte Beeinflussung des zuvor gehärteten Zapfenwurzelbereiches durch die Folgehärtung erzielt wird.

Aus der Druckschrift DE 1 955 010 sind ein Verfahren mit einer Vorrichtung zum ungleichförmigen Anlassen des Zapfenkreuzes durch Induktionserhitzung bekannt, bei welchem das Zapfenkreuz insgesamt oberflächengehärtet wird und anschließend die Zapfen an den Berührungsstellen mit den Nadeln des Lagers über 6-12 Sekunden auf eine Temperatur von 100-200 °C und eine Härte 60-67 HRC und die Stellen des Zapfenkreuzes in der Nähe der Zapfenbasis 6-12 Sekunden auf eine Temperatur von 450-650 °C und eine Härte von 50-56 HRC angelassen werden. Aufgrund der ungleichen Behandlung einzelner Bereiche kann es hier zu einer Überlagerung und damit einer anteiligen Beeinflußung zuvor behandelten Oberflächenbereiche kommen.

Der Erfindung liegt daher die Aufgabe zugrunde, ein Verfahren zur Verbesserung der mechanischen Eigenschaften von Zapfenkreuzen für den Einsatz in Gelenkwellen anzugeben, welches die im Stand der Technik genannten Nachteile vermeidet. Insbesondere sind neben einer zuverlässigen Beeinflußbarkeit der mechanischen Eigenschaften in den tatsächlich hoch beanspruchten Bereichen wenig zeitintensive Bearbeitungsvorgänge anzustreben.

Die erfindungsgemäße Lösung der Aufgabe ist durch die Merkmale der Ansprüche 1 und 5 charakterisiert. Vorteilhafte Ausgestaltungen sind jeweils in den Unteransprüchen wiedergegeben.

Erfindungsgemäß werden nur die in Umfangsrichtung ausgerichteten Flächenbereiche der Zapfenwurzeln der einzelnen Zapfen eines Zapfenkreuzes und der Übergangsflächen, die auch als Sattelflächen bezeichnet werden, und welche als Verbindungsflächen zwischen zwei einander in Umfangsrichtung benachbart zueinander angeordneten Zapfen fungieren, in einem Verfahrensschritt induktiv gehärtet Es erfolgt damit keine durchgängige Randschichthärtung des gesamten Zapfenkreuzes in einem Verfahrensgang, welche auf die theoretisch größte erforderliche Härtetiefe auszulegen wäre, mehr, sondern eine gezielte Verbesserung der mechanischen Eigenschaften, insbesondere der Härte, lediglich in den tatsächlich hoch beanspruchten Bereichen, d.h. den Übergangsbereichen zwischen den Zapfenwurzeln zweier in Umfangsrichtung einander benachbart angeordneten Zapfen, welche dynamisch auf Biegung beansprucht werden. Dies kann auf einfache Art und Weise kostengünstig realisiert werden.

Ein wesentlicher Vorteil dieses Verfahrens besteht darin, daß die tatsächlich hoch beanspruchten Bereiche, nämlich der Bereich der Zapfenwurzel, nicht in der Härteauslaufzone liegt, so daß die mechanischen Eigenschaften eines Zapfenkreuzes in diesem Bereich durch den Härtevorgang nicht nachteilig beeinflußt werden. Des weiteren wird mit dieser Lösung auch bei sequentieller Sattelflächenhärtung das Risiko einer nachteiligen Beeinflussung des zuvor gehärteten Zapfenwurzelbereiches bei Folgehärtung, wie diese bei der sequentiellen Zapfenhärtung mit zylindrischen Induktoren auftritt, vermieden. Auch ist dieses Verfahren nicht hinsichtlich der Tiefe der Härteschicht begrenzt, so daß auch große Bauteile in entsprechender Weise mit befriedigendem Ergebnis gehärtet werden können.

Aufgrund der nur teilweisen Härtung der Umfangsflächen der Zapfenwurzel eines Zapfens eines Zapfenkreuzes besteht theoretisch auch die Möglichkeit, die einzelnen Zapfen nacheinander zu härten, da bei entsprechender Abmessung der Zapfen die Härteauslaufzonen bei der Härtung der Sattelflächen und der in Umfangsrichtung weisenden Flächenbereiche der Zapfenwurzeln sich nicht überlagern.

An den Härtevorgang schließt sich zur Verringerung der Sprödigkeit ein Anlassvorgang an.

Vorrichtungsmäßig besteht die Möglichkeit, herkömmliche Induktionseinrichtungen, welche nicht speziell der Form des Flächenbereiches, welcher aus Sattelfläche und den in Umfangsrichtung weisenden Zapfenoberflächenbereichen besteht, entsprechen müssen, zu nutzen, und diese einzeln mit dem erforderlichem Abstand den Sattelflächen und den Zapfenwurzeln zuzuordnen.

Die Vorrichtung umfaßt dazu eine Halteeinrichtung für das Zapfenkreuz und wenigstens eine Induktionseinrichtung, weiche der Sattelfläche zwischen zwei in Umfangsrichtung einander benachbarten Zapfen zugeordnet ist. Die Induktionseinrichtung umfaßt wenigstens eine Spuleneinheit, vorzugsweise in Form einer Hochfrequenzspule, deren induzierte Ströme an den Oberflächen des Zapfens zum Zweck einer Beeinflussung der mechanischen Eigenschaften in den Randbereichen des Bauelementes wirksam werden. Dabei wird die Randschicht des Werkstückes bzw. des zu behandelnden Bauelementes in dem betroffenen Bereich durch die mittels der Hochfrequenzspule induzierten Ströme erhitzt und nach Erreichen der Austenitisierungstemperatur abgekühlt, beispielsweise durch Eintauchen in eine, auf Wasserbasis zusammengesetzte Kühlflüssigkeit. Denkbar ist auch das Abbrausen der Oberflächen.

Zur Durchführung des Verfahrens können unterschiedlich gestaltete Induktoren verwendet werden. Diese können als spezielle Forminduktionseinrichtungen, welche im wesentlichen die gleiche Kontur mit größeren Abmessungen wie die zu behandelnden Oberflächen aufweisen, oder als konventionelle, geometrisch einfach gestaltete und im Handel erhältliche Induktoren, welche in entsprechender Weise anzuordnen sind, ausgeführt sein.

Im ersten Fall werden spezielle Forminduktionseinrichtungen verwendet, welche jeweils den Umfang der Oberfläche der Zapfenwurzei eines Zapfens wenigstens teilweise in einem bestimmten Abstand, welcher vorzugsweise im Umschlingungsbereich konstant ist, umschlingen. Dazu können beispielsweise die Spulen auf einem halbringförmig gestalteten Tragelement in gleichmäßigen Abständen zueinander angeordnet sein oder aber bereits diese Form selbst aufweisen.

Im anderen Fall werden herkömmliche Spulenelemente in einem bestimmten Abstand zur zu behandelnden Oberfläche angeordnet, wobei jedoch hinsichtlich der Anordnung keine Anpassung an die zu behandelnde Oberfläche vorgenommen wird. Das erzeugbare Magnetwechselfeld sollte dabei jedoch eine bestimmte Mindestfrequenz aufweisen. Diese Mindestfrequenz, welche vorzugsweise bei ca. 10 kHz liegt, ermöglicht den schnellen Eintrag der mittels der Spule erzeugten Erwärmungsenergie in das Zapfenkreuz auch bei einem größerem Abstand zwischen den Spulenelementen und zu behandelnder Oberfläche.

Das erfindungsgemäße Verfahren ist zum Vergüten von Zapfenkreuzen unterschiedlicher Auslegung geeignet. Die Zapfenachsen der einzelnen Zapfen eines Zapfenkreuzes liegen dabei vorzugsweise in einer gemeinsamen Ebene. Es besteht jedoch auch die Möglichkeit, das erfindungsgemäße Verfahren für Zapfenkreuze mit zueinander versetzten Zapfen einzusetzten. In diesem Fall sind die Zapfenachsen in zwei zueinander versetzten und parallel zueinander ausgerichteten Ebenen angeordnet, wobei während des Härtevorgangs das Zapfenkreuz beziehungsweise die Zapfen zusammen gestellt sein sollten.

Die erfindungsgemäße Lösung wird nachfolgend anhand von Figuren erläutert. Darin ist im Einzelnen folgendes dargestellt:
- Fig. 1a, 1b: verdeutlichen in schematisch vereinfachter Darstellung ein Zapfenkreuz mit erfindungsgemäß behandelter Oberfläche;
- Fig. 2: verdeutlicht in schematisch vereinfachter Darstellung eine Vorrichtung zur Durchführung des Verfahrens.

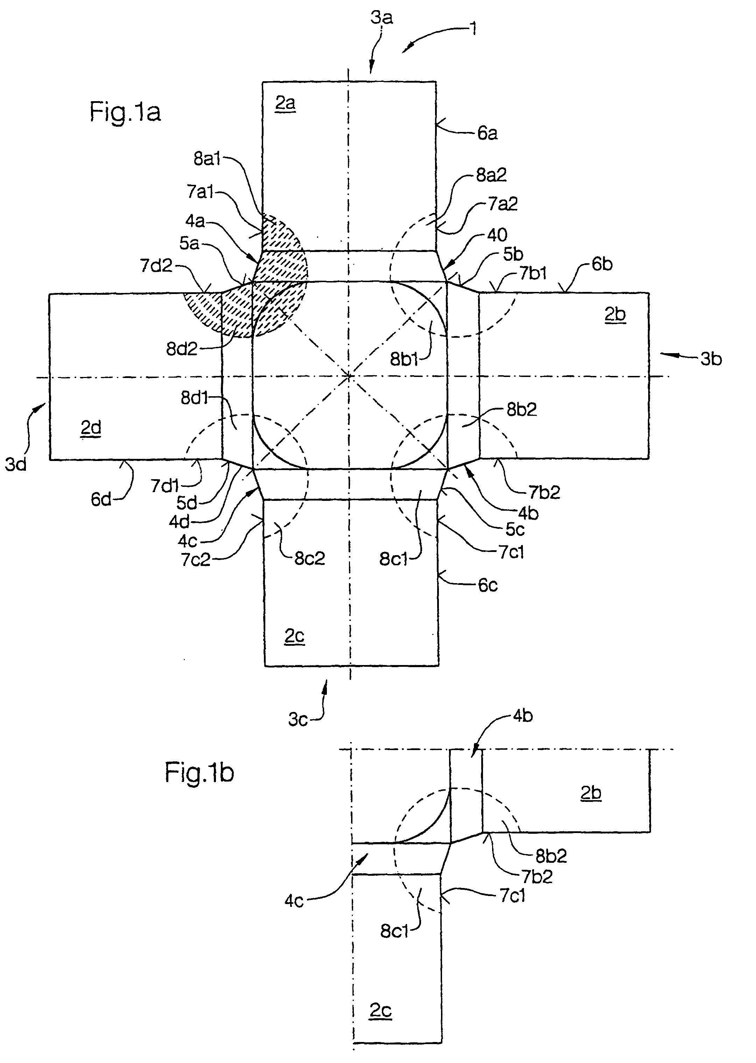

Fig. 1a und 1b verdeutlichen in schematisch vereinfachter Darstellung ein Zapfenkreuz 1 für den Einsatz in einer Gelenkwelle, umfassend die Zapfen 2a bis 2d, welche jeweils zueinander um 90° versetzt in einer Ebene angeordnet sind. Die Zapfen 2a - 2d werden dabei in ihren voneinander wegweisenden Endbereichen 3a - 3d in einer Lagerbohrung eines Flanschmitnehmers, insbesondere einer Gelenkgabelhälfte, gelagert. Die Zapfenwurzeln sind jeweils mit 4a - 4d und die Umfangsflächen der Zapfen 2a - 2d mit 6a - 6d gekennzeichnet. Zwischen jeweils zwei, in Umfangsrichtung betrachtet benachbarten Zapfen 2a - 2d sind im Bereich der Zapfenwurzeln 4a - 4d entsprechende Übergangsflächen, welche auch als Sattelflächen 5a - 5d bezeichnet werden, angeordnet. Erfindungsgemäß werden nur die in Umfangsrichtung ausgerichteten Flächenbereiche 7a1, 7a2 - 7d1, 7d2 der Zapfenwurzeln 4a - 4d der einzelnen Zapfen eines Zapfenkreuzes 1, welche sich an den Umfangsflächen 6a - 6d befinden, und die Übergangsflächen 5a-5d induktiv gehärtet. Die sich ergebenden Härteauslaufzonen sind in der Figur mit 8a1, 8a2 - 8d1, 8d2 bezeichnet. Die Figur 1b zeigt vergrößert einen Ausschnitt aus einem Zapfenkreuz 1, insbesondere der Zapfen 2b und 2c des Zapfenkreuzes gemäß Fig. 1a.

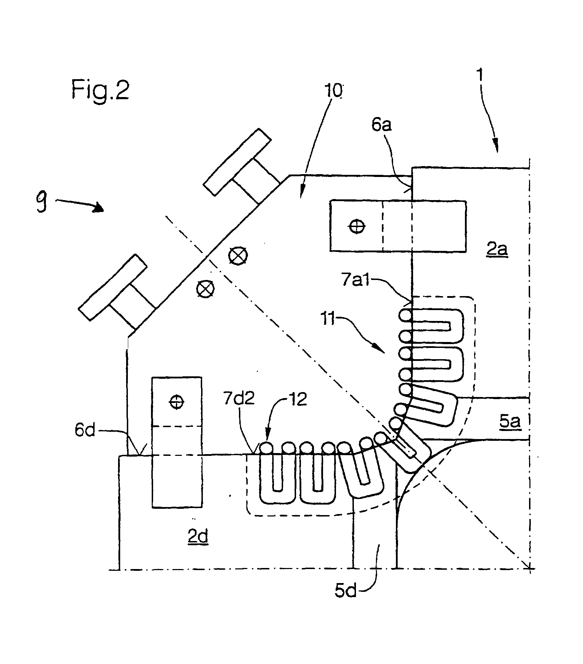

Die Figur 2 verdeutlicht eine mögliche Ausführung einer Vorrichtung 9 zur Durchführung des erfindungsgemäßen Verfahrens. Diese umfaßt wenigstens eine Haltevorrichtung 10 für das Zapfenkreuz 1 und eine Induktionseinrichtung 11, mit wenigstens einer Spuleneinheit 12 mittels welcher die Flächenbereiche 7a1, 7a2-7d1, 7d2 an den Umfangsflächen 6a - 6d der Zapfenwurzeln 4a - 4d einem Magnetwechselfeld ausgesetzt werden. Nach Erhitzung der Randschicht der zu behandelnden Oberfläche am Zapfenkreuz 1 durch induzierte Ströme und dem Erreichen der Austenitisierungstemperatur werden die derart behandelten Oberflächenbereiche mit einem Kühlmittel abgeschreckt.

Im dargestellten Fall sind die Haltevorrichtung 10 und die Induktionseinrichtung 11 derart konzipiert, daß die einzelnen Flächenbereiche zwischen zwei einander in Umfangrichtung benachbarter Zapfen 2a und 2b, 2b und 2c, 2c und 2d, 2d und 2a hier dargestellt für 2a und 2d, die durch die Übergangsflächen, hier der Fläche 5d und die in Umfangsrichtung zueinander weisenden Flächenbereiche 7a 1 und 7d 2 der Umfangsflächen 6a und 6d charakterisiert sind, einzeln nacheinander gehärtet werden. D. h., das Zapfenkreuz 1 wird gedreht oder aber die Spuleneinheit 12 gegenüber dem Zapfenkreuz.

Im anderen Fall sind eine Mehrzahl von Spuleneinheiten 12 vorgesehen, wobei jeweils eine, den einzelnen zu härtenden Flächenbereichen zwischen zwei einander in Umfangsrichtung benachbarten Zapfen 2a, 2b bzw. 2b, 2c bzw. 2c, 2d und 2d, 2a zugeordnet ist.

### Bezugszeichenliste

- 1: Zapfenkreuz
- 2a-2d: Zapfen
- 3a-3d: Endbereiche
- 4a-4d: Zapfenwurzel
- 5a-5d: Sattelflächen, Übergangsflächen
- 6a-6d: Umfangsflächen
- 7a1, 7a2-7d1, 7d2: Flächenbereich
- 8a1, 8a2-8d1, 8d2: Härtezonen
- 9: Vorrichtung
- 10: Halteeinrichtung
- 11: Induktionseinrichtung
- 12.1, 12.2: Spuleneinheit

## Patentansprüche

1. Verfahren zur Verbesserung der mechanischen Eigenschaften, insbesondere der Härte und/oder der Verschleißfestigkeit eines Zapfenkreuzes (1), umfassend eine Mehrzahl von in Umfangsrichtung angeordneten Zapfen (2a, 2b, 2c, 2d) und Übergangsflächen (5a, 5b, 5c, 5d) zwischen den Zapfenwurzeln (4a, 4b, 4c, 4d) jeweils zweier, unmittelbar einander in Umfangsrichtung benachbarter Zapfen (2a, 2b, 2c, 2d) für den Einsatz in Gelenkwellen, **dadurch gekennzeichnet, daß** jeweils nur ein Flächenbereich, welcher durch die Übergangsflächen (5a, 5b, 5c, 5d) zwischen zwei einander in Umfangsrichtung benachbarter Zapfen (2a, 2b, 2c, 2d) und die in Umfangsrichtung weisenden Flächenbereiche (7a 1, 7a 2, 7b 1, 7b 2, 7c 1, 7c 2, 7d 1, 7d 2) der Umfangsflächen (6a, 6b, 6c, 6d) der beiden einander benachbarten Zapfen (2a, 2b, 2c, 2d) beschreibbar ist, in einem Verfahrensschritt induktiv gehärtet und anschließend durch Kühlmittel abgeschreckt wird.

2. Verfahren nach Anspruch 1, **dadurch gekennzeichnet, daß** alle Flächenbereiche eines Zapfenkreuzes (1), welche durch die Übergangsflächen (5a, 5b, 5c, 5d) zwischen zwei einander in Umfangsrichtung benachbarten Zapfen (2a, 2b, 2c, 2d) und die in Umfangsrichtung weisenden Flächenbereiche (7a 1, 7a 2, 7b 1, 7b 2, 7c 1, 7c 2, 7d 1, 7d 2) der Umfangsflächen (6a, 6b, 6c, 6d) der beiden einander benachbarten Zapfen (2a, 2b, 2c, 2d) beschreibbar sind, gleichzeitig in einem Verfahrensschritt induktiv gehärtet werden.

3. Verfahren nach einem der Ansprüche 1 oder 2, **dadurch gekennzeichnet, daß** die Oberflächenbereiche nach induktiver Härtung und anschließender Abschreckung mit Kühlmittel einem Anlassvorgang bei 150-180° ausgesetzt werden.

4. Verfahren nach einem der Ansprüche 1 bis 3, **dadurch gekennzeichnet, daß** die, von der Zapfenwurzel (4a, 4b, 4c, 4d) wegweisenden und in einer Gelenkgabel lagerbaren Endbereiche (3a, 3b, 3c, 3d) der Zapfen (2a, 2b, 2c, 2d) in einem weiteren, separaten Verfahrensschritt gehärtet werden.

5. Zapfenkreuz (1) für den Einsatz in Gelenkwellen, umfassend eine Mehrzahl von in Umfangsrichtung angeordneten Zapfen (2a, 2b, 2c, 2d) und Übergangsflächen (5a, 5b, 5c, 5d) zwischen den Zapfenwurzeln (4a, 4b, 4c, 4d) jeweils zweier, unmittelbar einander in Umfangsrichtung benachbart angeordneter Zapfen (2a, 2b, 2c, 2d) für den Einsatz in Gelenkwellen, **dadurch gekennzeichnet, daß** dieses nach einem der Ansprüche 1 bis 4 oberflächenbehandelt ist.

6. Zapfenkreuz (1) nach Anspruch 5, **dadurch gekennzeichnet, daß** die Zapfen (2a, 2b, 2c, 2d) in einer Ebene angeordnet sind.

7. Zapfenkreuz (1) nach Anspruch 5, **dadurch gekennzeichnet, daß** die Zapfen in jeweils 90° gegeneinander verdrehten zwei unterschiedlichen parallel zueinander ausgerichteten Ebenen angeordnet sind.

## Claims

1. A method for improving the mechanical properties, especially the hardness and/or the capacity for resistance to wear of a journal cross assembly (1), comprising a plurality of a journals (2a, 2b, 2c, 2d) arranged in the circumferential direction and transitional surfaces (5a, 5b, 5c, 5d) between the journal roots (4a, 4b, 4c, 4d) of two journals (2a, 2b, 2c, 2d) each which are directly adjacent in the circumferential direction for the use in cardan shafts, **characterized in that** only one surface region each which is describable by the transitional surfaces (5a, 5b, 5c, 5d) between two journals (2a, 2b, 2c, 2d) which are directly adjacent in the circumferential direction and by the surface regions (7a 1, 7a 2, 7b 1, 7b 2, 7c 1, 7c 2, 7d 1, 7d 2) of the circumferential surfaces (6a, 6b, 6c, 6d) facing in the circumferential direction of the two mutually adjacent journals (2a, 2b, 2c, 2d) is inductively hardened and thereafter quenched by a coolant.

2. A method according to claim 1, **characterized in that** all surface regions of a journal cross assembly (1) which are describable by the transitional surfaces (5a, 5b, 5c, 5d) between two journals (2a, 2b, 2c, 2d) which are adjacent in the circumferential direction and by the surface regions (7a 1, 7a 2, 7b 1, 7b 2, 7c 1, 7c 2, 7d 1, 7d 2) of the circumferential surfaces (6a, 6b, 6c, 6d) of the two mutually adjacent journals (2a, 2b, 2c, 2d) are inductively hardened simultaneously in a process step.

3. A method according to one of the claims 1 or 2, **characterized in that** the surface regions are subjected to a tempering process at 150 to 180° after inductive hardening and subsequent quenching.

4. A method according to one of the claims 1 to 3, **characterized in that** the end regions (3a, 3b, 3c, 3d) of the journals which are averted from the journal roots (4a, 4b, 4c, 4d) and can be held in a fork-type joint are hardened in a further separate method step.

5. A journal cross assembly (1) for use in cardan shafts, comprising a plurality of journals (2a, 2b, 2c, 2d) which are arranged in the circumferential direction and of transitional surfaces (5a, 5b, 5c, 5d) between the journal roots (4a, 4b, 4c, 4d) of two journals (2a, 2b, 2c, 2d) each which are arranged directly adjacent to each other in the circumferential direction for use in cardan shafts, **characterized in that** the same is surface-treated according to one of the claims 1 to 4.

6. A journal cross assembly (1) according to claim 5, **characterized in that** the journals (2a, 2b, 2c, 2d) are arranged in a plane.

7. A journal cross assembly (1) according to claim 5, **characterized in that** the journals are arranged in two different, parallel aligned planes which are mutually twisted by 90° each.

## Revendications

1. Procédé destiné à améliorer les propriétés mécaniques, notamment la dureté et/ou la résistance à l'usure, d'un bloc croisillon (1) comprenant une pluralité de croisillons (2a, 2b, 3c, 2d) disposés suivant la direction circonférentielle et des surfaces de transition (5a, 5b, 5c, 5d) entre les bases (4a, 4b, 4c, 4d) de deux croisillons (2a, 2b, 2c, 2d) respectifs directement adjacents dans la direction circonférentielle, ledit bloc croisillon étant destiné à être utilisé dans des arbres de transmission, **caractérisé en ce qu'**une seule portion de surface pouvant être définie par les surfaces de transition (5a, 5b, 5c, 5d) entre deux croisillons voisins (2a, 2b, 2c, 2d) dans la direction circonférentielle et les portions de surfaces (7a 1, 7a 2, 7b 1, 7b 2, 7c 1, 7c 2, 7d 1, 7d 2), tournées dans la direction circonférentielle, des surfaces circonférentielles (6a, 6b, 6c, 6d) des deux croisillons (2a, 2b, 2c, 2d) voisins est durcie par induction dans une étape du procédé et est ensuite trempée au moyen d'un agent de refroidissement.

2. Procédé selon la revendication 1, **caractérisé en ce que** toutes les portions de surface d'un bloc croisillon (1) pouvant être définies par les surfaces de transition (5a, 5b, 5c, 5d) entre deux croisillons voisins (2a, 2b, 2c, 2d) dans la direction circonférentielle et les portions de surfaces (7a 1, 7a 2, 7b 1, 7b 2, 7c 1, 7c 2, 7d 1, 7d 2), tournées dans la direction circonférentielle, des surfaces circonférentielles (6a, 6b, 6c, 6d) des deux croisillons (2a, 2b, 2c, 2d) voisins sont soumises en même temps à un durcissement par induction dans une étape du procédé.

3. Procédé selon l'une quelconque des revendications 1 ou 2, **caractérisé en ce que**, après durcissement par induction et trempe avec un agent de refroidissement, les portions de surface sont revenues à 150 - 180°.

4. Procédé selon l'une quelconque des revendications 1 à 3, **caractérisé en ce que** les portions d'extrémité (3a, 3b, 3c, 3d) des croisillons (2a, 2b, 2c, 2d) détournées de la base (4a, 4b, 4c, 4d) des croisillons et aptes à être montées dans une fourche sont durcies dans une autre étape distincte du procédé.

5. Bloc croisillon (1) destiné à être utilisé dans des arbres de transmission, comprenant une pluralité de croisillons (2a, 2b, 2c, 2d) disposés suivant la direction circonférentielle et des surfaces de transition (5a, 5b, 5c, 5d) entre les bases (4a, 4b, 4c, 4d) de deux croisillons (2a, 2b, 2c, 2d) respectifs disposés de manière à être directement adjacents dans la direction circonférentielle, le bloc croisillon étant destiné à être utilisé dans des arbres de transmission, **caractérisé en ce qu'**on fait subir au bloc croisillon un traitement de surface selon l'une des revendications 1 à 4.

6. Bloc croisillon (1) selon la revendication 5, **caractérisé en ce que** les croisillons (2a, 2b, 2c, 2d) sont disposés dans un plan.

7. Bloc croisillon (1) selon la revendication 5, **caractérisé en ce que** les croisillons sont disposés dans deux plans différents qui s'étendent parallèlement entre eux et forment entre eux un angle de 90°.
